# EUROPEAN PATENT SPECIFICATION

(11) **EP 0 365 511 B1**
(45) Date of publication and mention of the grant of the patent: **21.04.1993**
(21) Application number: 89870142.0
(22) Date of filing: 02.10.1989
(51) Int. Cl.: H01S 3/041

(54) **Coupling-out device for gas lasers**
Auskoppel-Vorrichtung für Gaslaser
Dispositif de couplage de sortie pour laser à gaz

(30) Priority: 04.10.1988 BE 8801136
(43) Date of publication of application: 25.04.1990
(73) Proprietor: L.V.D. COMPANY N.V., B-8560 Gullegem (BE)
(72) Inventor: Muys, Peter, B-9881 Bellem-Aalter (BE)
(74) Representative: Dopchie, Jean-Marc

(56) References cited:
- FR-A- 2 286 394
- FR-A- 2 594 264
- US-A- 4 097 126
- PATENT ABSTRACTS OF JAPAN, vol. 10, no. 197 (E-418)[2253], 10th July 1986 & JP-A-61 42 181 (AGENCY OF IND. SCIENCE & TECHNOL.) 28-02-1986
- PATENT ABSTRACTS OF JAPAN, vol. 9, no. 131 (E-319)[1854], 6th June 1985 & JP-A-60 17 973 (MITSUBISHI DENKI) 29-01-1985

## Description

The present invention relates to a coupling-out device for gas lasers. The present invention is particularly aimed at gas lasers, such as CO₂ lasers, with a high output, i.e. an output of several kilowatts.

The coupling-out device regulates the amount of laser light which is generated in the laser tube and emerges from the laser tube in the form of a laser ray or beam, and thus also determines the amount of laser light remaining in the laser tube. The coupling-out device is very important for proper functioning of the gas laser, on the one hand because the amount of laser light leaving the laser tube must be synchronized with the increase in the laser light inside the laser tube or, in other words, to the amplification factor of the laser tube. The coupling-out device is, on the other hand, very important because it largely determines the characteristics of the coupled-out laser beam.

The most important part of a coupling-out device is the coupling-out window. The coupling-out window is made of a transparent material which has the property of transmitting a known percentage of the laser light generated in the laser tube and reflecting the remaining percentage. The coupling-out window must not degrade the beam characteristics of the disconnected laser beam, e.g. by deforming under the influence of the laser radiation itself.

It is, however, unavoidable that the coupling-out window absorbs part of the transmitted light. The absorbed laser light heats up the coupling-out window and causes expansion and thermal stresses. This produces phase aberrations in the coupled-out laser beam: phase aberrations which greatly degrade the beam characteristics such as divergence, mode quality and focusing ability. This is then again very detrimental to the usability of the coupled-out laser beam. For example, the material processing characteristics of the coupled-out laser beam are greatly degraded by the heating of the coupling-out window.

The present invention provides for a process for cooling the coupling-out window of a gas laser and a device for the use of said process.

A known principle for cooling of the coupling-out window is the so-called edge cooling, which involves providing the housing of the coupling-out device with a channel which runs round the coupling-out window, and through which a cooling liquid is conveyed. This system works satisfactorily in gas lasers with a low output, i.e. with a coupled-out output of max. 1 - 1.5 kilowatts, but is unsatisfactory in lasers with a high output, since the laser intensity is at the maximum in the centre of a laser beam and is significantly lower at the edge of the laser beam. The centre of the coupling-out window is thus more greatly heated up than the edges of the coupling-out window. The places where most heat is generated are thus located furthest away from the cooling liquid. At high outputs that heat cannot be removed quickly enough by conduction through the material of the coupling-out window and that of the housing, with the result that the coupling-out window heats up too much. This problem obviously becomes more acute as the diameter of the coupling-out window increases.

JP-A-6017973 and JP-A-6142181 describe a possible process and device for cooling the coupling-out window, in which the cooling takes place by means of nozzles which are placed outside the optical path, and in which, on the one hand, a laser medium gas is sprayed onto the inside of the coupling-out window and, on the other, dried and cooled air is sprayed onto the outside thereof. A disadvantage of this process and corresponding device is that uniform cooling over the whole surface is not achieved with this type of cooling, but rather a spot effect. Another disadvantage is that here we are using a continuous supply of new air, which means that there is a risk of floating dust particles being drawn along and damaging the window by deep penetration.

Another known method for cooling optical elements which are passed through by a laser beam is described in FR-A-2286394 corresponding to the preambles of claim 1 and 2, where provision is made for a closed circuit in which a gas (preferably helium) is circulated by pumping, and in which a certain part of the path of the cooling agent runs between 2 anti-reflection pieces which together form an optical element (a window and a lens). It is evident that this cooling method can be used for the cooling of the coupling-out window. The disadvantage of it is, however, that this is cooling for which the cooling gas has to have a very low temperature (cryogenic cooling), (for example to -180°), for which liquid nitrogen is consequently necessary, in a cooling element along which the helium flows, and another additional disadvantage is that provisions have to be present to avoid the formation of ice on the outside of the optical element (a stream of dry gas - preferably nitrogen gas - which is guided along the surface). This is a very cumbersome and expensive solution.

The object of the invention is to offer a solution which results in an efficient cooling of the coupling-out window, without the above-mentioned disadvantages being experienced.

The process according to the invention for cooling the coupling-out window in the coupling-out device of a gas laser is defined in claim 1. Claim 7 is related to the use of the process in a gas laser.

The type of gas which is used in the process according to the invention depends on the type of gas laser on which the process according to the invention is used. The gas must in any case have sufficiently great specific heat, and must also be transparent to the laser wavelength produced in the laser concerned. Nitrogen gas or helium are therefore used in a CO₂ laser.

The efficiency of the process according to the invention greatly depends on the extent to which the cooling gas sweeps uniformly over the entire surface of the coupling-out window. According to the invention, the cooling gas is therefore preferably injected through a slit between the coupling-out window and a window disposed next to the coupling-out window.

The coupling-out device according to the invention is defined in claim 2. Claim 8 is related to a gas laser provided with such a coupling out device.

In a preferred embodiment of the coupling-out device according to the invention, the openings of the channels opening out onto the coupling-out window are slits running essentially parallel to a surface of the coupling-out window, and the second window, in such a way that there is a space between the two windows into which the slits open.

The second window ensures that the cooling gas is conveyed along the coupling-out window and makes it possible for the gas to be circulated by pumping in a closed circuit. The slit form of the openings ensures that the cooling gas sweeps uniformly distributed over the entire surface of the coupling-out window. The infeed of the gas through openings of small diameter, such as those of, for example, jet nozzles, results in poor distribution of the gas and thus in non-uniform cooling of the coupling-out window.

According to the invention, the gas is made to expand after passing the infeed opening. In a preferred embodiment of the coupling-out device according to the invention the infeed opening through which the gas leaves the channels narrow in the direction of flow of the gas, and the distance between the two windows is greater than the infeed slit opening. Through this arrangement the gas expands in the space between the two windows, which produces a lowering of the temperature of the gas.

The cooling of the coupling-out window of a gas laser thus takes place to a large extent through the temperature reduction which is obtained through expansion of a gas. The gas is then circulated further by pumping in a closed circuit, by means of a compressor, in which an ordinary heat exchanger handles the cooling of the gas.

Due to the fact that cryogenic cooling is not used here (see FR-A-2286394), there is no risk here of condensation or ice formation on the external surface of the cooling window.

The cooling system according to the invention remains just as efficient in the case of a coupling-out window diameter of 20 mm as in the case of a diameter of 50 mm. This is not the case with edge cooling, because the edge is further and further from the centre of the coupling-out window with increasing diameter; and it is precisely in that centre that the heating is greatest.

For a better understanding of the invention, a possible embodiment of the coupling-out device according to the invention is described in the description below, by way of example without any restricting character, with reference to the appended figures, in which :

Fig. 1 is a longitudinal section of a laser tube end provided with a coupling-out device, with the housing sectioned along BB in Fig. 2.

Fig. 2 is a partial cross-section and a partial front view, along AA in Fig. 1, of the front part, of the housing of the coupling-out device, which contains a second window.

Fig. 3 is a detail of Fig. 1 in which the slit forming the opening between the feed channel and the space between the two windows is shown in cross-section.

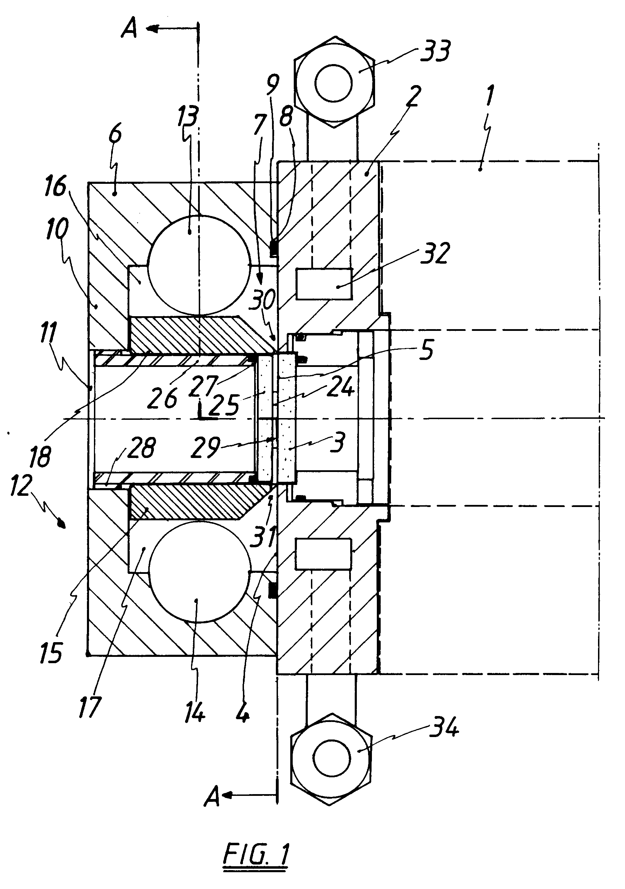

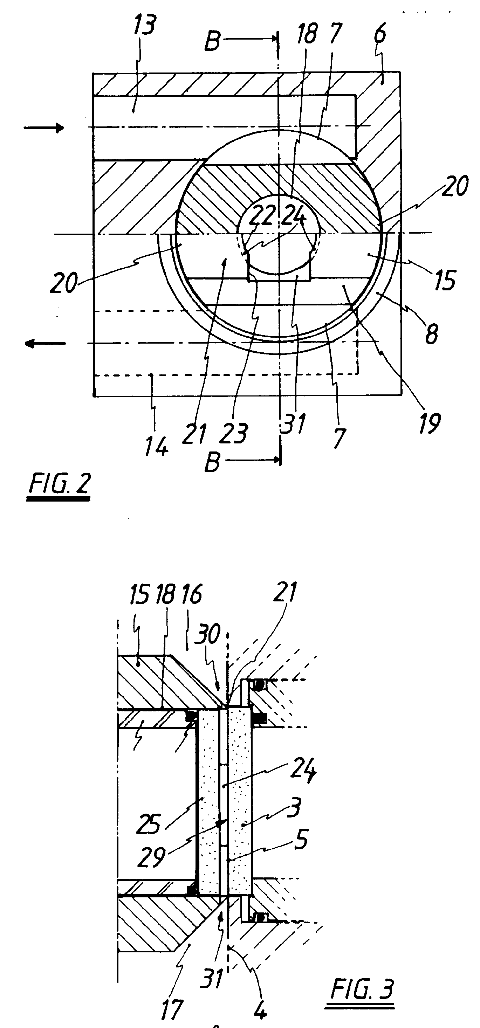

The end of the laser tube (1) (Fig.1) is shut off by an annular element (2) which contains the coupling-out window (3). A housing (6) sits against the annular element (2) (Fig. 1 and 2). A cylindrical hollow (7) is provided at the side of the housing (6) which rests against the annular element (2). Provided round the cylindrical hollow (7) is provided with a round opening (11) towards the front side (12) of the housing (6). The housing (6) is also provided with two parallel channels (13 & 14), of which the axis stands at right angles to that of the cylindrical hollow (7), which are situated on either side of said cylindrical hollow (7), and which partially run through the cylindrical hollow (7), so that they open out into said cylindrical hollow (7). The channels form the feed channel (13) and discharge channel (14) for a gas.

A block (15) is mounted in the cylindrical hollow (7) (Figs. 1 & 2). The block (15) is oblong in shape with two rounded ends (20) which abut against the wall of the cylindrical hollow (7). The height of the block (15) is equal to the depth of the cylindrical hollow (7), so that the top face (21) of the block (15) abuts against the front surface (4) of the annular element (2), and so that the block (15) divides the cylindrical hollow (7) into two chambers (16 & 17). The longitudinal axis of the block (15) comes to lie parallel to the axes of the channels (13, 14), so that the chamber (16) is connected only to the channel (13) and chamber (17) only to channel (14). The block (15) is provided with a central bore (18), the diameter of which corresponds to that of the coupling-out window (3), and which has a part (22) with a smaller diameter against the top surface (21) of the block (15) (Fig. 2). The central bore (18) comes to rest opposite the round opening (11) of the housing (6). The longitudinal edges (19) of the block (15) which come to rest against the front surface (4) of the annular element (2) are bevelled (Figs. 1, 2 & 3), so that the chambers (16 and 17) slowly widen out from a certain point towards the annular element. The top side (21) of the block (15) is also provided with a flat, rectangular trench (23) running over the central bore (18), and transversely over the block (15), and ending at both bevelled longitudinal edges (19). The width of the flat trench (23) is smaller here than the diameter of the central bore (18), so that on either side of the flat trench (23) two lips (24) of the narrowed part (22) of the central bore (18) are left.

A second window (25) is placed against the lips (24) in the central bore (18). Said second window (25) is held in place by a hollow cylindrical tube (26) which fits into the central bore (18), and one end (27) of which presses against the second window (25), while the other end (28), which is provided with external screw thread, is fixed in the round opening (11) which is for this purpose provided with internal screw thread.

Through this device a space (29) whose height corresponds to the thickness of the lips (24) is produced between the coupling-out window (3) and the second window (25). Through the flat trench (23) which runs through the space (29), the space (29),is connected to both chambers (16 and 17) via slits (30, 31) (Figs. 1 and 3). The slits (30, 31) open out onto the bevelled longitudinal edges (19) of the block (15).

By means of this device, a cooling gas can be conveyed via the feed channel (13), via the feed chamber (16) and through the slit (30) to the space (29), and thus along the external surface (5) ofthe coupling-out window (3), where the gas is discharged via the slit (31), the discharge chamber (17) and the discharge channel (14) (arrows, Fig. 1). While flowing through the chamber (29) the gas cools the complete external surface (5) of the coupling-out window (3). The heat absorbed by the gas is subsequently released into a heat exchanger of a closed circuit which is connected to the two channels (13, 14), and which is provided with a compressor for the purpose.

While the height and the width of the exit slit opening (31) corresponds to the dimensions of the trench (23) the height of the feet slit opening (30) is narrower than the thickness of the lips (24) (fig. 3) between the coupling-out window (3) and the second window (25). The gas consequently expands in the chamber (29) after having been compressed while flowing through the narrower feed slit (30). This expansion produces a fall in temperature in the gas, and thus additional cooling of the coupling-out window (3).

Another embodiment according to the invention comprises a cooling window in which the cooling channel is directly cut out, the necessary divergence (and possibly convergence) of the channel being obtained directly through the shape of the channel in the cooling window. The advantage of this embodiment lies in the optimum reproducibility of the cooling slit thus obtained, an appreciable limitation of the dimensions of the device, and a simpler installation or replacement of the cooling windows individually.

The annular element (2), which contains the coupling-out window (3), can still be provided with means for edge cooling of the coupling-out window (3). The means comprise, for example, an annular channel (32) inside the annular element (2). That annular channel is accommodated via a feed and discharge connection (33, 34) in a circuit through which a cooling liquid flows. For large outputs it may be necessary also to cool the second window (25), which is, of course, also cooled by the gas, additionally by edge cooling. The block (15) can be provided with the necessary channels for this.

A part of the laser light generated in the laser tube (1) leaves the laser tube (1) via the coupling-out window in the form of a laser ray or beam and can emerge through the second window (25), the tube (26) and the round opening (11).

And advantage of the invention lies in a process and a device for application of said process in order to achieve a simple and efficient cooling of the coupling-out window of a gas laser, in which a uniform cooling of the entire surface of the coupling-out window is obtained, without the risk of problems with icing or condensation, or deep penetration by dust particles.

Another advantage of the invention lies in the independent arrangement of the cooling window (with accompanying device) opposite the coupling-out device of a gas laser. (In other words, the coupling-out window requires no special design to permits its use in conjunction with the cooling window).

## Claims

1. Process for cooling a coupling-out window in a coupling-out device of a gas laser, in which a gas is forced along a surface of the coupling-out window, into a space between the coupling-out window and a window set up next to the coupling-out window, and is circulated by pumping in a closed circuit, which is provided with means for reducing the temperature of the gas, characterized in that the gas is caused to expand with a cooling effect in the space between the two windows.

2. Coupling-out device for a gas laser, comprising a coupling-out window (3) enclosed by a housing (2,6) of the coupling-out device, said housing being provided with channels (13, 14) for the infeed and discharge of the cooling gas, channels which open out via openings (30, 31) into a space (29) between the coupling-out window (3) and a second window (25) set up next to it, characterized in that the infeed opening (30) is smaller than the width of the space (29) as well as than the exit opening (31) by which an expansion of the cooling gas with a cooling effect will be achieved.

3. Coupling-out device for a gas laser, according to claim 2, characterized in that the openings (30, 31) of the channels (13, 14) are slits (30, 31) which are elongated essentially parallel to the surface of the coupling-out window (3), said slit (30) forming the infeed opening with a width smaller than the width of the space (29).

4. Coupling-out device for a gas laser according to claim 3 characterized in that at least the slits (30, respectively 31) through which the gas flows from the channel (13) to space (29) to channel (14), narrow and widen into the direction of the flow, respectively.

5. Coupling-out device for gas laser according to one of claims 2 to 4, characterized in that the space is cut out in the second window (25).

6. Coupling-out device for a gas laser according to one of claims 2 to 5 characterized in that the coupling-out window (3) and/or the second window (25) are provided with means for edge cooling.

7. Use of the process according to claim 1 in a gas laser.

8. Gas laser provided with a coupling-out device according to one of claims 2 to 6.

## Patentansprüche

1. Verfahren zum Kühlen eines Auskoppelfensters in einer Auskoppelvorrichtung eines Gaslasers, bei dem ein Gas längs einer Oberfläche des Auskoppelfensters in einen Raum zwischen dem Auskoppelfenster und einem dem Auskoppelfenster benachbart eingerichteten Fenster gezwungen wird und durch Pumpen in einem geschlossenen Kreislauf umgewälzt wird, der mit Mitteln zum Mindern der Temperatur des Gases versehen ist, dadurch gekennzeichnet, daß das Gas veranlaßt wird, mit einer abkühlenden Wirkung in dem Raum zwischen den beiden Fenstern zu expandieren.

2. Auskoppelvorrichtung für einen Gaslaser mit einem Auskoppelfenster (3), welches von einem Gehäuse (2, 6) der Auskoppelvorrichtung umschlossen ist, das mit Kanälen (13, 14) zum Einspeisen und Abführen des Kühlgases versehen ist, die über Öffnungen (30, 31) in einen Raum (29) zwischen dem Auskoppelfenster (3) und einem ihm benachbart errichteten, zweiten Fenster (25) münden, dadurch gekennzeichnet, daß die Zufuhröffnung (30) kleiner ist als die Breite des Raums (29) und auch als die Ausgangsöffnung (31), wodurch eine Expansion des Kühlgases mit einer kühlenden Wirkung erzielt wird.

3. Auskoppelvorrichtung für einen Gaslaser nach Anspruch 2, dadurch gekennzeichnet, daß die Öffnungen (30, 31) der Kanäle (13, 14) Schlitze (30, 31) sind, die im wesentlichen parallel zur Oberfläche des Auskoppelfensters (3) langgestreckt sind, wobei der Schlitz (30) die Zufuhröffnung mit kleinerer Breite als die Breite des Raums (29) bildet.

4. Auskoppelvorrichtung für einen Gaslaser nach Anspruch 3, dadurch gekennzeichnet, daß mindestens die Schlitze (30 bzw. 31), durch die das Gas vom Kanal (13) zum Raum (29) zum Kanal (14) fließt, sich in die Richtung der Strömung verengen bzw. erweitern.

5. Auskoppelvorrichtung für einen Gaslaser nach einem der Ansprüche 2 bis 4, dadurch gekennzeichnet, daß der Raum aus dem zweiten Fenster (25) ausgeschnitten ist.

6. Auskoppelvorrichtung für einen Gaslaser nach einem der Ansprüche 2 bis 5, dadurch gekennzeichnet, daß das Auskoppelfenster (3) und/oder das zweite Fenster (25) mit Mitteln zur Randkühlung versehen sind.

7. Anwendung des Verfahrens nach Anspruch 1 bei einem Gaslaser.

8. Gaslaser, der mit einer Auskoppelvorrichtung gemäß einem der Ansprüche 2 bis 6 versehen ist.

## Revendications

1. Procédé de refroidissement d'une fenêtre de désaccouplage dans un dispositif de désaccouplage d'un laser à gaz, dans lequel un gaz est insufflé le long d'une surface de la fenêtre de désaccouplage dans un espace compris entre la fenêtre de désaccouplage et une fenêtre montée à proximité de la fenêtre de désaccouplage et mis en circulation par pompage dans un circuit fermé, qui est doté de moyens pour réduire la température du gaz, caractérisé en ce que le gaz est amené à se dilater avec un effet de refroidissement dans l'espace compris entre les deux fenêtres.

2. Dispositif de désaccouplage de laser comprenant une fenêtre de désaccouplage (3) enserrée dans un gainage (2, 6) du dispositif de désaccouplage, ce gainage étant pourvu de canaux (13, 14) pour l'alimentation et la décharge du gaz de refroidissement, canaux qui débouchent via des ouvertures (30, 31) dans un espace (29) entre la fenêtre de désaccouplage (3) et une seconde fenêtre (25) montée à proximité de celle-ci, caractérisé en ce que l'ouverture d'alimentation (30) est plus petite que la largeur de l'espace (29) ainsi que de l'ouverture de sortie (31), si bien qu'une expansion du gaz de refroidissement est obtenue avec un effet de refroidissement.

3. Dispositif de désaccouplage de laser à gaz selon la revendication 2, caractérisé en ce que les ouvertures (30, 31) des canaux (13, 14) sont des fentes (30, 31) qui sont allongées de manière essentiellement parallèle à la surface de la fenêtre de désaccouplage (3), la fente (30) formant l'ouverture d'alimentation ayant une largeur plus faible que la largeur de l'espace (29).

4. Dispositif de désaccouplage de laser à gaz selon la revendication 3, caractérisé en ce qu'au moins les fentes (30, respectivement 31) à travers lesquelles le gaz s'écoule du canal (13) à l'espace (29) et au canal (14) se rétrécissent et s'évasent dans la direction de l'écoulement, respectivement.

5. Dispositif de désaccouplage de laser à gaz selon l'une quelconque des revendications 2 à 4, caractérisé en ce que l'espace est découpé dans la seconde fenêtre (25).

6. Dispositif de désaccouplage de laser à gaz selon l'une quelconque des revendications 2 à 5, caractérisé en ce que la fenêtre de désaccouplage (3) et/ou la seconde fenêtre (25) sont équipées de moyens pour un refroidissement marginal.

7. Emploi du procédé selon la revendication 1 dans un laser à gaz.

8. Laser à gaz doté d'un dispositif de désaccouplage selon l'une quelconque des revendications 2 à 6.
